# EUROPEAN PATENT APPLICATION

(11) **EP 3 667 454 A1**
(43) Date of publication of application: **17.06.2020**
(21) Application number: 19207029.0
(22) Date of filing: 05.11.2019
(51) Int. Cl.: G06F 1/16, G06F 1/18, H04M 1/18

(54) **ELECTRONIC DEVICE**

(30) Priority: 11.12.2018 TW 107216841 U
(71) Applicant: Pegatron Corporation, Taipei City 112 (TW)
(72) Inventor: CHEN, Chien-I, Taipei City 112 (TW); LEE, Wei-Pang, Taipei City 112 (TW); LIAO, Hsin-Lan, Taipei City 112 (TW); LAI, Chen-Wei, Taipei City 112 (TW); TSAO, Yi-Lun, Taipei City 112 (TW); LEE, Jyun-Yi, Taipei City 112 (TW)
(74) Representative: Becker & Kurig Partnerschaft Patentanwälte PartmbB

(57) **Abstract**

An electronic device (100) includes a housing (1) and a corner structure (2). The housing is provided with a corner portion (10) and two side edges (11) adjacent to the corner portion. The housing includes an outer surface (12), an inner surface (13) parallel to the outer surface, and a side surface (14) located at the corner portion and respectively connected to the outer surface and the inner surface, wherein the side surface is a hierarchical curved surface. The corner structure is embedded in the corner portion. The corner structure is provided with an arc-shaped side edge (26) that is aligned with the adjacent two side edges, one side of the corner structure, which is opposite to the arc-shaped side edge, is fitted to the side surface of the housing, and the corner structure is a reinforced material structure.

## Description

### BACKGROUND

### Technical Field

The present utility model relates to an electronic device, and more particularly to an electronic device having a housing corner with reinforced structure.

### Related Art

A traditional electronic device mainly uses a side strip wrapping frame method to adhere a cushioning material around the frame of a casing to achieve the purpose of impact resistance. For example, the cushioning material is attached to the periphery of a housing, and high elongation and high rebound characteristics thereof are utilized to absorb impact energy and protect the body of the electronic device.

However, most of the cushioning materials are polymer materials. Compared with a metal casing to be protected, the cushioning material itself has poor texture and appearance machinability, resulting in poor consistency of the overall appearance of a product, affecting the appearance texture of the product, and thus impacting consumers' impressions and reducing their desire to buy. In addition, the traditional method uses gum or glue to adhere a side strip of the highly elastic material to the periphery of the casing of the product, and under the variation of environmental conditions, it is easy to produce reliability problems such as gum failure.

### SUMMARY

In view of this, some embodiments of the present disclosure provide an electronic device.

The electronic device of one embodiment of the present disclosure includes a housing and a corner structure. The housing is provided with a corner portion and two side edges adjacent to the corner portion. The housing includes an outer surface, an inner surface parallel to the outer surface, and a side surface located at the corner portion and respectively connected to the outer surface and the inner surface, wherein the side surface is a hierarchical curved surface. The corner structure is embedded in the corner portion. The corner structure is provided with an arc-shaped side edge that is aligned with the adjacent two side edges, one side of the corner structure, which is opposite to the arc-shaped side edge, is fitted to the side surface of the housing, and the corner structure is a reinforced material structure.

Thereby, the corner structure embedded in the corner portion effectively absorbs and transfers the energy of the impact of the electronic device to the side surface of the housing. The mechanism design hides the bearing surface between the corner structure and the housing inside, and the external impact energy received by the electronic device is transferred to the bearing surface inside, causing the bearing surface to slightly deform in structure to absorb the impact energy, thereby maintaining the appearance integrity of the electronic device and avoiding the problem of a depressed appearance of the housing due to a fall.

The purposes, technical contents, features, and effects achieved by the present disclosure will be more readily understood by the following specific embodiments in conjunction with accompanying drawings.

### BRIEF DESCRIPTION OF THE DRAWINGS

FIG. 1 is a three-dimensional schematic view of an electronic device according to one embodiment of the present disclosure.
FIG. 2 is a partially enlarged schematic view of the electronic device taken along line AA' according to one embodiment of the present disclosure.
FIG. 3 is a three-dimensional schematic view of an electronic device according to one embodiment of the present disclosure.
FIG. 4 is a partially enlarged schematic view of the electronic device taken along line BB' according to one embodiment of the present disclosure.
FIG. 5 is an exploded schematic top view of the electronic device according to one embodiment of the present disclosure.
FIG. 6 is an exploded schematic bottom view of the electronic device according to one embodiment of the present disclosure.

### DETAILED DESCRIPTION

Various embodiments of the present disclosure are described in detail below with reference to drawings. In the description of specification, a number of specific details are provided for a reader to have a more complete understanding of the present disclosure. However, the present disclosure is implemented while some or all of the specific details are omitted. The same or similar elements in the drawings are denoted by the same or similar symbols. It is to be noted that the drawings are for illustrative purposes only and do not represent the actual dimensions or quantities of the elements. Some of the details are not fully drawn in order to facilitate the simplicity of the drawings.

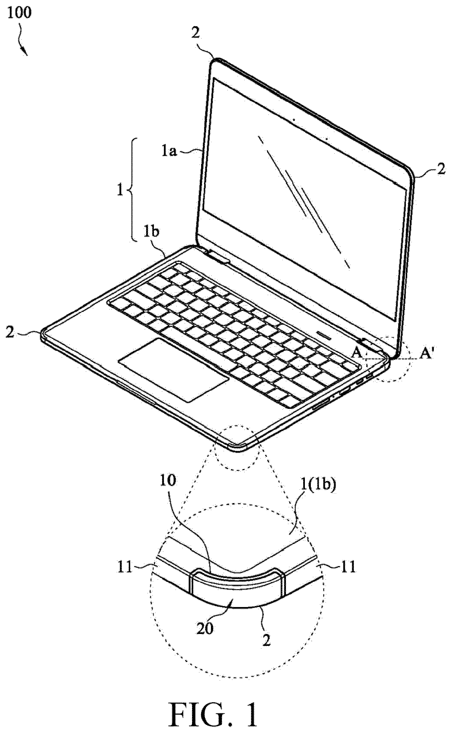

Referring to FIG. 1, FIG. 1 is a three-dimensional schematic view of an electronic device according to one embodiment of the present disclosure. The electronic device 100 according to one embodiment of the present disclosure includes a housing 1 and a corner structure 2. The housing 1 is provided with a corner portion 10 and two side edges 11, and the corner portion 10 is sandwiched by the adjacent two side edges 11, that is, the housing 1 is provided with a plurality of corner portions 10 and a plurality of side edges 11 adjacent to both sides of each corner portion 10. The corner structure 2 is arranged at the corner portion 10. In at least one embodiment, the electronic device 100 can be a notebook computer, a tablet computer, a mobile device, or the like. For example, the housing 1 is provided with an upper casing 1a and a lower casing 1b which can be opened and closed correspondingly. Therefore, in this embodiment, the electronic device 100 includes eight corner structures 2 respectively arranged at the eight corner portions 10. However, the disclosure is not limited thereto, and the corresponding corner structures 2 are adjustably disposed only at any number of corner portions 10 of the housing. In one embodiment, the electronic device is of a polygon, the included angle between the adjacent two side edges 11 is designed according to requirements, and the corner structure 2 is embedded in the corresponding corner portion 10 that is easy to collide. In this embodiment, the electronic device has a rectangular appearance, and therefore, the adjacent two side edges 11 are perpendicular to each other.

In this embodiment, an arc-shaped side edge 20 is located at the outer edge of the corner structure 2 and is disposed corresponding to the housing 1, and the arc-shaped side edge 20 is aligned with the adjacent two side edges 11, in which the length or width of the corner structure 2 is, for example, but not limited to, 15 mm. In other words, the corner structure 2 is provided with the arc-shaped side edge 20 that is in contact with the outside. The corner structure 2 is made of a high-strength and high-elasticity metal material, and may effectively absorb energy from external impact. In this embodiment, the corner structure 2 is of a reinforced material structure. In one embodiment, a strength factor of the corner structure 2 is greater than a strength factor of the housing 1. For example, the corner structure 2 includes a metal material such as titanium, aluminum and liquid metal, but the disclosure is not limited thereto. In short, a material of a surface of the corner structure 2 is selected to be similar in texture to the housing 1 or easy to handle appearance, and has better mechanical properties than the housing . The arc-shaped side edge 20 of the corner structure 2 is aligned with the adjacent two side edges 11 to cover the housing 1, thereby avoiding the aesthetic problem of a cushioning material protruding from the frame of the housing 1.

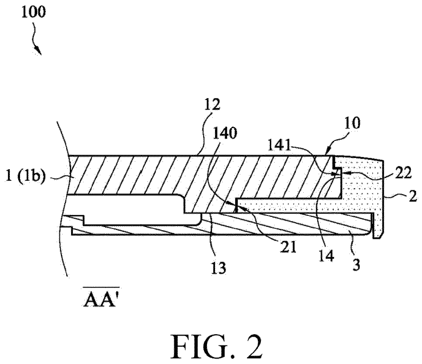

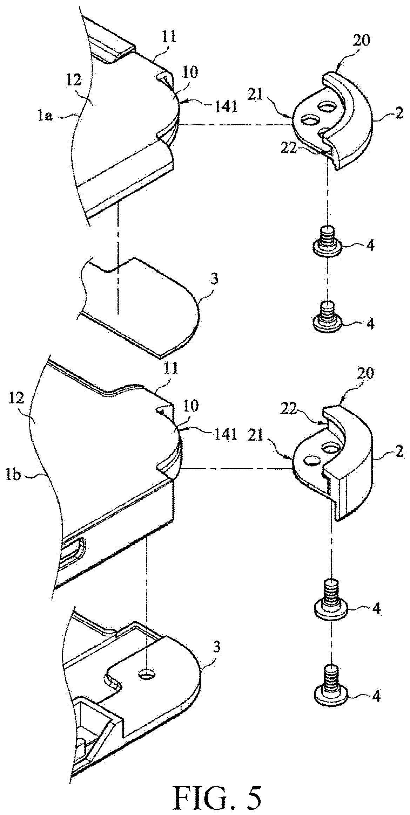

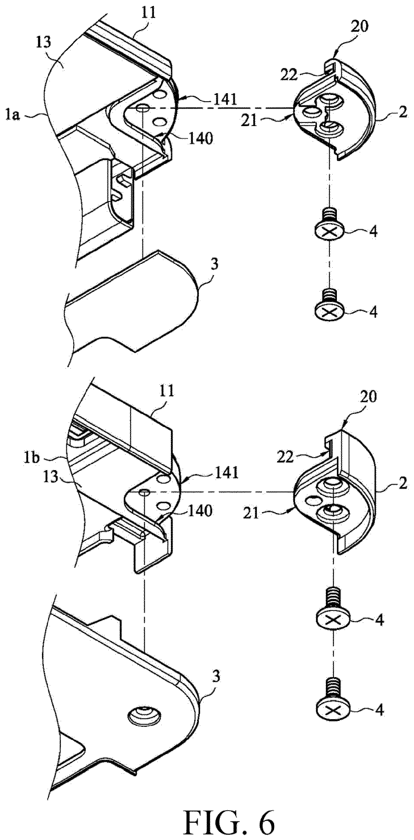

Referring to FIG. 2, a partially enlarged schematic view of the lower casing 1b along line AA' is shown. In this embodiment, the housing 1 includes an outer surface 12, an inner surface 13 and a side surface 14. The inner surface 13 and the outer surface 12 are opposite to each other and parallel to each other. The side surface 14 is respectively connected to the outer surface 12 and the inner surface 13, and the side surface 14 serves as a bearing surface of the housing 1 in contact with the corner structure 2, that is, one side of the corner structure 2, which is opposite to the arc-shaped side edge 20, is fitted to the side surface 14 of the housing 1. Since the strength factor of the metal material of the corner structure 2 is higher than that of the housing 1, the side surface 14 (i.e., the bearing surface) at the junction with the housing 1 will be deformed when impacted, and therefore, the energy of the external impact received by the corner structure 2 is absorbed and dispersed by the deformation amount of the bearing surface. The side surface 14 is a hierarchical curved surface, that is, the side surface 14 has a concave-convex structure with multiple high-low fluctuations. By the hierarchical curved surface design, the total area of the bearing surface is increased to effectively absorb the impact energy. Referring to FIG. 2, FIG. 5 and FIG. 6, in some embodiments, an area of the outer surface 12 is greater than an area of the inner surface 13. In addition to contributing to the formation of the hierarchical side surface 14, the area, exposed outside the electronic product, of the corner structure 2 is reduced to save the production cost and realize the aesthetic frame design.

According to the above structure, the corner, having weaker strength in a drop test, of the housing 1 of the electronic device 100 is replaced with an impact-resistant corner structure 2, in which the corner structure 2 embedded in the corner portion 10 is made of a high-strength and high-elasticity metal material, and effectively absorbs and transfers the impact energy received by the electronic device 100 to the side surface 14 of the housing 1.

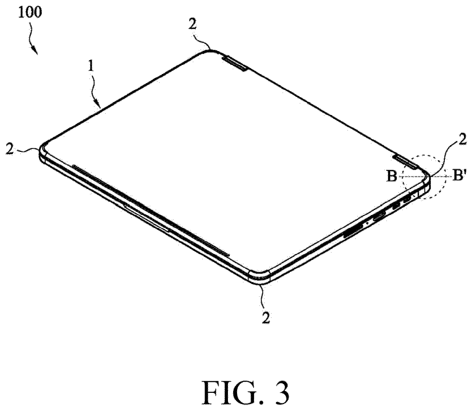

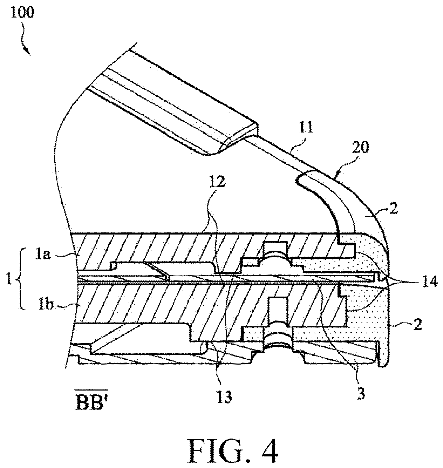

The corner structure of related derivative embodiments is explained below. Referring to FIG. 3 and FIG. 4, FIG. 4 is a partially enlarged schematic view of the electronic device shown in FIG. 3 taken along line BB'. In this embodiment, the electronic device 100 is a notebook computer provided with a housing 1, a plurality of corner structures 2 and a plurality of plate bodies 3, in which the housing 1 includes an upper casing 1a and a lower casing 1b, and the plate body 3 is, but not limited to, a base, a display panel, an ornamental plate, or the like. For example, the plate body 3 disposed opposite to the upper casing 1a is a display panel or a screen frame, and the plate body 3 disposed opposite to the lower casing 1b is a base having a good thermal conductivity.

Referring to FIG. 4 to FIG. 6, in this embodiment, the side surface 14 of the housing 1 is provided with a fitting groove 140. For example, the fitting groove 140 is formed by a milling process, that is, a milling slot. The corner structure 2 is provided with a fitting protrusion 21 corresponding to the fitting groove 140 with respect to one side opposite to the arc-shaped side edge 20, and the fitting protrusion 21 extends parallel to a horizontal plane formed by the side edges 11, that is, the extending direction of the fitting protrusion 21 is parallel to the plate body 3 such that the corner structure 2 is embedded in the corner portion 10. Since the fitting groove 140 of the side surface 14 is provided with a concave-convex surface, the total contact area of the bearing surface is increased to effectively absorb the impact energy. In addition, another function of the fitting groove 140 is to withstand the bending moment at the junction of the housing 1 and the corner structure 2, and effectively reduces the tensile stress received by a bonding element 4 when subjected to an external force.

In this embodiment, the side surface 14 of the housing 1 is provided with a positioning protrusion 141, and the positioning protrusion 141 extends parallel to a horizontal plane formed by the side edges 11, that is, the extending direction of the positioning protrusion 141 is parallel to the plate body 3. The corner structure 2 is provided with a positioning groove 22 corresponding to the positioning protrusion 141, whereby the positioning protrusion 141 of the side surface 14 and the positioning groove 22 of the corner structure 2 are fitted to each other such that the corner structure 2 is positioned at the corner portion 10. In addition, the electronic device further includes at least one bonding element 4, for example, but not limited to a locking screw, and each bonding element 4 passes through the corner structure 2 and is locked to the housing 1. For example, the electronic device is provided with two bonding elements 4 that are disposed on the two side peripheries of the fitting protrusion 21, the corner structure 2 is fixed between the housing 1 and the plate body 3 and the corner structure 2 is locked to the housing 1, and thereby, the corner structure 2 is stably embedded in the corner portion 10.

In summary, some embodiments of the present disclosure provide the electronic device 100. The plurality of high-strength corner structures 2 are used to be embedded in the corner portions 10 where the housing 1 is easy to collide, and the energy of the impact received by the electronic device 100 is effectively absorbed and transferred to the side surface 14 of the housing 1. In other words, the mechanism design hides the bearing surface between the corner structure 2 and the housing 1 inside, and the external impact energy received by the electronic device 100 is transferred to the bearing surface inside, causing the bearing surface to slightly deform in structure to absorb and disperse the impact energy of the external impact received by the corner structure 2, thereby maintaining the appearance integrity of the electronic device 100. Therefore, the structural features of the electronic device 100 are changed, so that the advantage of protecting the appearance structure of the housing 1 is generated. That is, the problem of a depressed appearance of the housing 1 due to a fall is avoided, and the problems of the increase in overall weight and product cost caused by the high-strength material, which is used to replace the overall material of the housing 1, are avoided. Overall, through the appearance design and material selection of the corner structure 2 in combination with the design mechanism and the product housing 1, compared with a conventional impact-resistant structure, the risk of bonding reliability of various parts generated by gum adhering to the cushioning material is avoided, and it is not necessary to replace the material of the whole housing with a high-strength material with excellent mechanical properties, thereby avoiding the heavy whole machine due to the increase in material density. Meanwhile, a material of a surface of the corner structure 2 is selected to be similar in texture to the housing 1 or easy to handle, and has better mechanical properties than the product housing 1. The arc-shaped side edge 20 is aligned with the adjacent side edges 11 to cover the housing 1, thereby avoiding the aesthetic problem of the traditional cushioning material covering the frame of the housing 1.

The embodiments described above are only for explaining the technical ideas and characteristics of the present disclosure, and the purpose thereof is to enable those skilled in the art to understand and accordingly implement the contents of the present disclosure. It is not intended to limit the scope of the present disclosure, that is, any equivalent change or modification made based on the spirit disclosed by the present disclosure shall fall within the patented scope of the present disclosure.

## Claims

1. An electronic device, comprising:
a housing, provided with a corner portion and two side edges adjacent to the corner portion, wherein the housing comprises an outer surface, an inner surface parallel to the outer surface, and a side surface located at the corner portion and respectively connected to the outer surface and the inner surface, and the side surface is a hierarchical curved surface; and
a corner structure, embedded in the corner portion, wherein the corner structure is provided with an arc-shaped side edge that is aligned with the adjacent two side edges, one side of the corner structure, which is opposite to the arc-shaped side edge, is fitted to the side surface of the housing, and the corner structure is a reinforced material structure.

2. The electronic device according to claim 1, wherein an area of the outer surface is greater than an area of the inner surface.

3. The electronic device according to any one of claims 1 to 2, wherein the side surface is provided with a fitting groove, the corner structure is provided with a fitting protrusion with respect to the side opposite to the arc-shaped side edge, and the fitting protrusion extends parallel to a horizontal plane formed by the two side edges, such that the corner structure and the corner portion are fitted to each other.

4. The electronic device according to any one of claims 1 to 3, wherein the side surface is provided with a positioning protrusion, the positioning protrusion extends parallel to a horizontal plane formed by the two side edges, and the corner structure is provided with a positioning groove corresponding to the positioning protrusion, such that the corner structure is positioned at the corner portion.

5. The electronic device according to any one of claims 1 to 4, further comprising:
a plate body, wherein the corner structure is sandwiched between the housing and the plate body.

6. The electronic device according to claim 5, wherein the plate body is a base or display screen of the electronic device.

7. The electronic device according to any one of claims 1 to 6, further comprising at least one bonding element that passes through the corner structure and locks the corner structure to the housing.

8. The electronic device according to claim 7, wherein the at least one bonding element is a locking screw.

9. The electronic device according to any one of claims 1 to 8, wherein the corner structure comprises at least one of titanium, aluminum and liquid metal.

10. The electronic device according to any one of claims 1 to 9, wherein a strength factor of the corner structure is greater than a strength factor of the housing.
